# EUROPEAN PATENT APPLICATION

(11) **EP 4 161 153 A1**
(43) Date of publication of application: **05.04.2023**
(21) Application number: 22197757.2
(22) Date of filing: 26.09.2022
(51) Int. Cl.: H04W 40/02, H04L 45/24, H04L 45/00, H04W 28/08, H04W 48/18

(54) **URSP PROCEDURE ENHANCEMENT FOR REDUNDANT PDU SESSION**

(30) Priority: 29.09.2021 US 202163249634 P; 01.09.2022 US 202217901845
(71) Applicant: MediaTek Inc., Hsinchu City 30078 (TW)
(72) Inventor: HUANG-FU, Chien-Chun, 30078 Hsinchu City (TW); LIN, Yuan-Chieh, 30078 Hsinchu City (TW)
(74) Representative: Habermann, Hruschka & Schnabel

(57) **Abstract**

A method for route selection policy (URSP) rule matching supporting redundant PDU session is proposed. When an application is executed, the upper layer of a UE sends the application information to URSP entity for matching a URSP rule. The UE selects and evaluates a route selection descriptor (RSD) from a list of RSDs of a selected URSP rule to be matched with a PDU session. If there is a "PDU session pair ID type" or "RSN type" route selection descriptor component in an RSD, and there is also "multi-access preference type" descriptor component, or a "preferred access type" descriptor component set to "non-3GPP access" in the same RSD, UE ignores the RSD since it is invalid for a redundant PDU session.

## Description

### CROSS REFERENCE TO RELATED APPLICATIONS

This application claims priority under 35 U.S.C. §119 from U.S. Provisional Application Number 63/249,634, entitled "URSP Procedure Enhancement for Redundant PDU Session", filed on September 29, 2021, the subject matter of which is incorporated herein by reference.

### TECHNICAL FIELD

The disclosed embodiments relate generally to wireless communication, and, more particularly, to method of UE route selection policy (URSP) procedure enhancement for redundant PDU session in 5G systems (5GS).

### BACKGROUND

The wireless communications network has grown exponentially over the years. A Long-Term Evolution (LTE) system offers high peak data rates, low latency, improved system capacity, and low operating cost resulting from simplified network architecture. LTE systems, also known as the 4G system, also provide seamless integration to older wireless network, such as GSM, CDMA, and Universal Mobile Telecommunication System (UMTS). In LTE systems, an evolved universal terrestrial radio access network (E-UTRAN) includes a plurality of evolved Node-Bs (eNodeBs or eNBs) communicating with a plurality of mobile stations, referred to as user equipments (UEs). The 3^{rd} generation partner project (3GPP) network normally includes a hybrid of 2G/3G/4G systems. The Next Generation Mobile Network (NGMN) board has decided to focus the future NGMN activities on defining the end-to-end requirements for 5G new radio (NR) systems (5GS).

The UE policies for 5GS include UE route selection policy (URSP) and access network discovery and selection policy (ANDSP). The UE policies can be delivered form a Policy Control Function (PCF) to UE. PCF takes care of network policies to manage network behavior. PCF gets the subscription information from Unified Data Management (UDM). PCF interfaces to both Access and Mobility Function (AMF) to manage the mobility context and Session Management Function (SMF) to manage the session contexts. PCF also plays a crucial role in providing a schema for network slicing and roaming. PCF triggers the URSP which enables the UE to determine how a certain application should be handled in the context of an existing or new Protocol Data Unit (PDU) session. The UE policies can also be pre-configured in UE. The pre-configured policy (stored in USIM or NVRAM) should be applied by UE only when UE has not received the same type of policy from the PCF.

A PDU session defines the association between the UE and the data network that provides a PDU connectivity service. Each PDU session is identified by a PDU session ID, and includes one or more QoS flows and QoS rules. When an application is executed, the upper layer sends the application information to the URSP entity for matching a URSP rule (i.e., by evaluating the traffic descriptor; TD), and use the corresponding RSD (Route Selection Descriptor) to associated with an existing PDU session or to establish a new PDU session. The UE tries to reuse the existing PDU session if the RSD characteristics match the characteristics of the existing PDU session.

The concept of "redundant PDU session" is introduced for URLLC (Ultra Reliable and Low Latency Communication) applications. The 5GSM sublayer may support establishment of redundant PDU sessions. In order to establish a set of two redundant PDU sessions, a UE can include a PDU session pair ID, an RSN, or both in a PDU SESSION ESTABLISHMENT REQUEST message for each of the two redundant PDU sessions. The UE can set the PDU session pair ID, the RSN, or both according to URSP or UE local configuration. In addition, an SMF can handle two PDU sessions as redundant even if the UE provides neither a PDU session pair ID nor an RSN in a PDU SESSION ESTABLISHMENT REQUEST message for each of the PDU sessions.

To ensure the reliability and low latency, the corresponding redundant PDU session should be established over 3GPP access. In addition, multi-access (MA) PDU session is excluded since MA PDU session implies the data may be transmitted over non-3GPP access. During URSP rule matching triggered by the upper layer, if there is a "PDU session pair ID type" or "RSN type" route selection descriptor component in a route selection descriptor, and there is also "multi-access preference type" descriptor component in the same route selection descriptor, UE behavior is undefined. Further, if there is a "PDU session pair ID type" or "RSN type" route selection descriptor component in a route selection descriptor, and there is also "preferred access type" descriptor component set to "non-3GPP access" in the same route selection descriptor, UE behavior is undefined.

A solution is sought in order to prevent the UE from (1) establishing a redundant PDU session over non-3GPP access, or (2) establishing a redundant MA PDU session (the NW cannot properly handle URLLC application packets sent over non-3GPP access so sending a such kind packet to non-3GPP can experience un-expected results); otherwise the UE and NW either (1) need to handle a redundant PDU session established over non-3GPP access or need to handle a redundant MA PDU session established with non-3GPP access leg or (2) fails to establish a redundant PDU session over non-3GPP access or fails to establish a redundant MA PDU session; due to NW rejection and lead to wasting of time thus downgrade the user experience when the user is using an application that rely on redundant PDU session.

### SUMMARY

A method for route selection policy (URSP) rule matching supporting redundant PDU session is proposed. When an application is executed, the upper layer of a UE sends the application information to URSP entity for matching a URSP rule. The UE selects and evaluates a route selection descriptor (RSD) from a list of RSDs of a selected URSP rule to be matched with a PDU session. If there is a "PDU session pair ID type" or "RSN type" route selection descriptor component in an RSD, and there is also "multi-access preference type" descriptor component, or a "preferred access type" descriptor component set to "non-3GPP access" in the same RSD, UE ignores the RSD since it is invalid for a redundant PDU session.

In one embodiment, a UE initiates a Route Selection Policy (URSP) rule matching procedure in a mobile communication network. The UE selects a URSP rule from one or more URSP rules. The UE matches the traffic descriptor of the selected URSP rule with an application information. The UE selects and evaluates a route selection descriptor (RSD) from a list of RSDs of the selected URSP rule to be matched with a PDU session. The RSD has a list of stored RSD components comprising a PDU session pair ID or a redundancy sequency number (RSN). The UE ignores the RSD upon determining that the RSD further comprises a preferred access type set to non-3GPP access, or ignores the RSD upon determining that the RSD further comprises a multi-access preference type.

Other embodiments and advantages are described in the detailed description below. This summary does not purport to define the invention. The invention is defined by the claims.

### BRIEF DESCRIPTION OF THE DRAWINGS

The accompanying drawings, where like numerals indicate like components, illustrate embodiments of the invention.
Figure 1 illustrates an exemplary 5G network supporting User Equipment (UE) route selection policy (URSP) handling with enhancement for redundant PDU session in 5G new radio (NR) systems in accordance with one novel aspect.
Figure 2 illustrates simplified block diagrams of a user equipment (UE) and a base station in accordance with embodiments of the current invention.
Figure 3 illustrates the content of a URSP rule as defined in 3GPP specification and parameters for enhanced URSP rule matching.
Figure 4 illustrates examples of URSP rule matching for an application, where RSD of a selected URSP rule is ignored to support redundant PDU session.
Figure 5 illustrates a sequence flow between a UE and the network for enhanced URSP rule matching for redundant PDU session in accordance with one novel aspect of the present invention.
Figure 6 is a flow chart of a method of enhanced URSP rule matching in accordance with one novel aspect of the present invention.

### DETAILED DESCRIPTION

Reference will now be made in detail to some embodiments of the invention, examples of which are illustrated in the accompanying drawings.

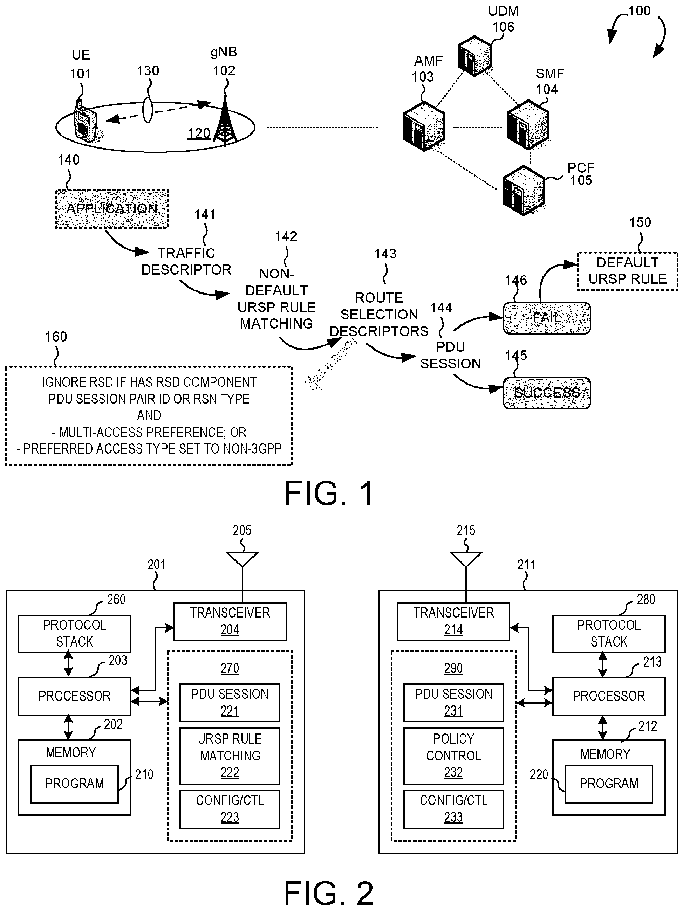

Figure 1 illustrates an exemplary 5G network 100 supporting User Equipment (UE) route selection policy (URSP) handling with enhancement for redundant PDU session in 5G new radio (NR) systems in accordance with one novel aspect. 5G new radio (NR) network 100 comprises a user equipment UE 101, a base station gNB 102, an access and mobility management function (AMF) 103, a session management function (SMF) 104, a policy control function (PCF) 105, and a unified data management (UDM) 106. In the example of Figure 1, UE 101 and its serving base station gNB 102 belong to part of a radio access network RAN 120. In Access Stratum (AS) layer, RAN 120 provides radio access for UE 101 via a radio access technology (RAT). In Non-Access Stratum (NAS) layer, AMF 103 communicates with gNB 102 and 5GC for access and mobility management of wireless access devices in 5G network 100. UE 101 may be equipped with a radio frequency (RF) transceiver or multiple RF transceivers for different application services via different RATs/CNs. UE 101 may be a smart phone, a wearable device, an Internet of Things (IoT) device, and a tablet, etc.

5GS networks are packet-switched (PS) Internet Protocol (IP) networks. This means that the networks deliver all data traffic in IP packets, and provide users with Always-On IP Connectivity. When UE joins a 5GS network, a Packet Data Network (PDN) address (i.e., the one that can be used on the PDN) is assigned to the UE for its connection to the PDN. In 4G, EPS has defined a Default EPS Bearer to provide the IP Connectivity that is Always-On. In 5G, a Protocol Data Unit (PDU) session establishment procedure is a parallel procedure of a PDN connection procedure in 4G. A PDU session (e.g., 130) defines the association between the UE and the data network that provides a PDU connectivity service. Each PDU session is identified by a PDU session ID, and may include multiple QoS flows and QoS rules.

The UE policies for 5GS include UE route selection policy (URSP) and access network discovery and selection policy (ANDSP). The UE policies can be delivered form Policy Control Function (PCF) to UE. PCF takes care of network policies to manage network behavior. PCF gets the subscription information from Unified Data Management (UDM). PCF interfaces to both Access and Mobility Function (AMF) to manage the mobility context and Session Management Function (SMF) to manage the session contexts. PCF also plays a crucial role in providing a scheme for network slicing and roaming. PCF provisions the URSP which enables the UE to determine how a certain application should be handled in the context of an existing or new PDU session. The UE policies can also be pre-configured in UE (USIM or NVRAM). The pre-configured policy should be applied by UE only when UE has not received the same type of policy from the PCF.

When UE 101 starts application 140, UE upper layers trigger URSP rule matching. UE 101 evaluates the URSP rules, except the default URSP rule, with a traffic descriptor matching the application information in the order of their precedence values. If UE 101 finds the traffic descriptor (141) in a non-default URSP rule (142) matching the application information, and an established PDU session matching at least one of the route selection descriptors (143) of the URSP rule, the UE then provides information on the PDU session that matches the route selection descriptor (RSD) of the lowest precedence value to the upper layers. Otherwise, the UE selects a route selection descriptor with the next smallest precedence value which has not been evaluated. If no non-default matching URSP rule can be found and if UE local configuration for the application is available, UE 101 should perform the association of the application to a PDU session accordingly.

If no matching PDU session exists, the UE NAS layer should attempt to establish a PDU session 144. If the PDU session establishment is successful (145), the UE NAS layer should provide information of the successfully established PDU session to the upper layers. Otherwise, if no non-default matching URSP rule can be found and if either UE local configuration for the application is not available or the PDU session establishment based on UE local configuration for the application fails (146), UE 101 should perform the association of the application to a PDU session or to non-seamless non-3GPP offload according to the default URSP rule with the "match-all" traffic descriptor (150). If the association is unsuccessful, UE 101 informs the upper layers.

The concept of "redundant PDU session" is introduced for URLLC (Ultra Reliable and Low Latency Communication) applications. The 5GSM sublayer may support establishment of redundant PDU sessions. In order to establish a set of two redundant PDU sessions, a UE can include a PDU session pair ID, an RSN, or both in a PDU SESSION ESTABLISHMENT REQUEST message for each of the two redundant PDU sessions. The UE can set the PDU session pair ID, the redundancy sequency number (RSN), or both according to URSP or UE local configuration. To ensure the reliability and low latency, the corresponding redundant PDU session should be established over 3GPP access. Therefore, multi-access (MA) PDU session is excluded for redundant PDU session since MA PDU session implies the data may be transmitted over non-3GPP access.

In one novel aspect, a method for enhanced URSP rule matching supporting redundant PDU session is proposed, as depicted by 160. During URSP rule matching triggered by the upper layer, if there is a "PDU session pair ID type" or "RSN type" route selection descriptor component in a route selection descriptor, and there is also "multi-access preference type" descriptor component in the same route selection descriptor, UE ignores the RSD. Further, if there is a "PDU session pair ID type" or "RSN type" route selection descriptor component in a route selection descriptor, and there is also "preferred access type" descriptor component set to "non-3GPP access" in the same route selection descriptor, UE ignores the RSD. The UE then selects a route selection descriptor with the next smallest precedence value which has not been evaluated from the selected URSP rule.

Figure 2 illustrates simplified block diagrams of wireless devices, e.g., a UE 201 and network entity 211 in accordance with embodiments of the current invention. Network entity 211 may be a base station combined with an MME or AMF. Network entity 211 has an antenna 215, which transmits and receives radio signals. A radio frequency RF transceiver module 214, coupled with the antenna, receives RF signals from antenna 215, converts them to baseband signals and sends them to processor 213. RF transceiver 214 also converts received baseband signals from processor 213, converts them to RF signals, and sends out to antenna 215. Processor 213 processes the received baseband signals and invokes different functional modules to perform features in base station 211. Memory 212 stores program instructions and data 220 to control the operations of base station 211. In the example of Figure 2, network entity 211 also includes protocol stack 280 and a set of control functional modules and circuit 290. PDU session handling circuit 231 handles PDU session establishment and modification procedures. Policy control module 232 that configures policy rules for UE. Configuration and control circuit 233 provides different parameters to configure and control UE of related functionalities including mobility management and session management.

Similarly, UE 201 has memory 202, a processor 203, and radio frequency (RF) transceiver module 204. RF transceiver 204 is coupled with antenna 205, receives RF signals from antenna 205, converts them to baseband signals, and sends them to processor 203. RF transceiver 204 also converts received baseband signals from processor 203, converts them to RF signals, and sends out to antenna 205. Processor 203 processes the received baseband signals and invokes different functional modules and circuits to perform features in UE 201. Memory 202 stores data and program instructions 210 to be executed by the processor to control the operations of UE 201. Suitable processors include, by way of example, a special purpose processor, a digital signal processor (DSP), a plurality of micro-processors, one or more micro-processor associated with a DSP core, a controller, a microcontroller, application specific integrated circuits (ASICs), file programmable gate array (FPGA) circuits, and other type of integrated circuits (ICs), and/or state machines. A processor in associated with software may be used to implement and configure features of UE 201.

UE 201 also comprises a set of functional modules and control circuits to carry out functional tasks of UE 201. Protocol stacks 260 comprise application layer and other upper layers to manage different applications, Non-Access-Stratum (NAS) layer to communicate with an AMF entity connecting to the core network, Radio Resource Control (RRC) layer for high layer configuration and control, Packet Data Convergence Protocol/Radio Link Control (PDCP/RLC) layer, Media Access Control (MAC) layer, and Physical (PHY) layer. System modules and circuits 270 may be implemented and configured by software, firmware, hardware, and/or combination thereof. The function modules and circuits, when executed by the processors via program instructions contained in the memory, interwork with each other to allow UE 201 to perform embodiments and functional tasks and features in the network. In one example, the upper layer entities request information of the PDU session via which to send a PDU of an application, system modules and circuits 270 comprise a PDU session handling circuit 221 that performs PDU session establishment and modification procedures with the network, a URSP rule matching circuit 222 that performs URSP rule matching, and a configuration and control circuit 223 that handles configuration and control parameters for mobility management and session management.

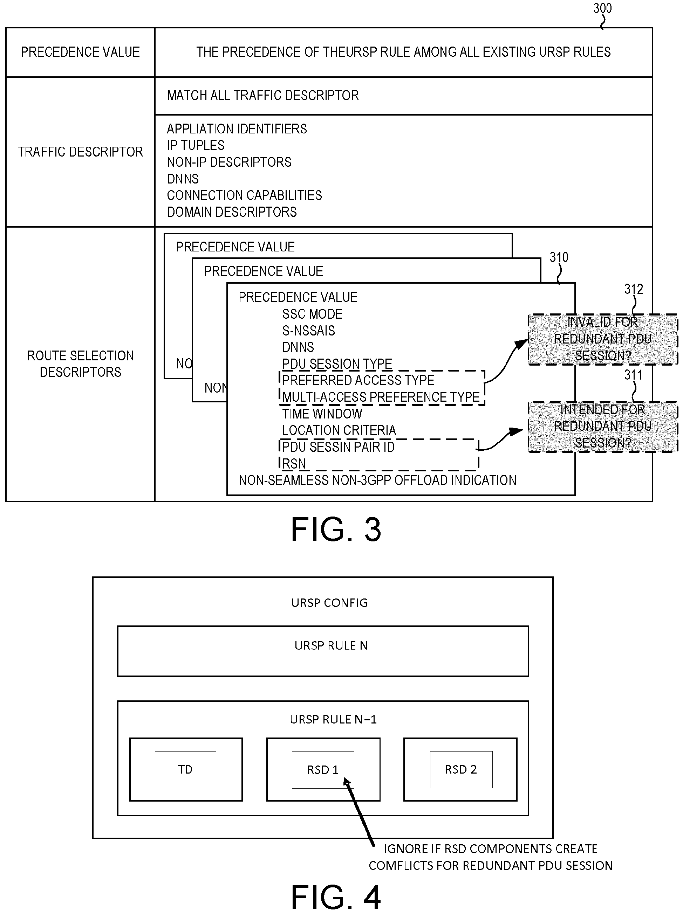

Figure 3 illustrates the content of a URSP rule as defined in 3GPP specification and parameters for enhanced URSP rule matching. URSP is defined as a set of one or more URSP rules. As depicted by Table 300, each URSP rule is composed of: 1) a precedence value of the URSP rule identifying the precedence of the URSP rule among all the existing URSP rules; 2) a traffic descriptor; and 3) one or more route selection descriptors. The traffic descriptor includes either 1) a match-all traffic descriptor; or 2) at least one of the following components: A) one or more application identifiers; B) one or more IP 3 tuples, i.e., the destination IP address, the destination port number, and the protocol used above the IP; C) one or more non-IP descriptors, i.e., destination information of non-IP traffic; D) one or more DNNs; E) one or more connection capabilities; and F) one or more domain descriptors, i.e., destination FQDN(s).

Each route selection descriptor (RSD) includes a precedence value of the route selection descriptor and either 1) one PDU session type and, optionally, one or more of the followings: A) SSC mode; B) one or more S-NSSAIs; C) one or more DNNs; D) PDU session type; E) preferred access type; F) multi-access preference; G) time window; H) location criteria; I) PDU session pair ID; and J) RSN; or 2) non-seamless non-3GPP offload indication. Only one URSP rule in the URSP can be a default URSP rule and the default URSP rule should contain a match-all traffic descriptor. If a default URSP rule and one or more non-default URSP rules are included in the URSP, any non-default URSP rule should have lower precedence value (i.e., higher priority) than the default URSP rule.

URSP is used by the UE to determine if a detected application can be associated to an established PDU session, can be offload to non-3GPP access outside a PDU session, or can trigger the establishment of a new PDU session. A URSP rule includes one traffic descriptor that specifies the matching criteria and one or more of the following RSD components associated with a precedence value: SSC mode selection policy to associated the matching application with SSC mode, network slice selection policy to associated the matching application with S-NSSAI, DNN selection policy to associated the matching application with DNN, PDU session type policy to associated the matching application with a PDU session type, time window, location criteria, preferred access type indicating a preferred access (3GPP or non-3GPP) when UE needs to establish a new PDU session for the matching application, multi-access preference type for MA PDU, PDU session pair ID for redundant PDU session, RSN, and non-seamless offload policy to determine that the matching application should be non-seamlessly offloaded to non-3GPP access (i.e., out of a PDU session).

In one novel aspect, when performing URSP rule matching with an application, the UE matches an application information to a traffic descriptor (TD) of a selected URSP rule. The UE then selects a route selection descriptor (RSD) and determines whether the RSD includes a "PDU session pair ID type" or "RSN type" route selection descriptor component or both as depicted by 311. If so, then the UE knows that the RSD is intended to be associated with a redundant PDU session. The UE further determines whether the same RSD also includes "multi-access preference type" descriptor component or includes "preferred access type" that is set to "non-3GPP access" (as depicted by 312). If so, then such RSD is not appropriate for redundant PDU session, because a redundant PDU session is introduced for URLLC (Ultra Reliable and Low Latency Communication) and therefore should be established only over 3GPP access to ensure the reliability and low latency. As a result, this RSD comprises conflicting parameters and should be ignored by the UE for URSP rule matching.

Figure 4 illustrates examples of URSP rule matching for an application, where RSD of a selected URSP rule is ignored and skipped to support redundant PDU session. When an application is started on a UE, the UE upper layers trigger URSP rule matching. The UE evaluates the URSP rules, except the default URSP rule, with a traffic descriptor matching the application information in the order of their precedence values. If the UE finds the traffic descriptor (TD) in a non-default URSP rule matching the application information, and an established PDU session matching at least one of the route selection descriptors of the URSP rule, the UE then provides information on the PDU session that matches the route selection descriptor (RSD) of the lowest precedence value to the upper layers. Otherwise, the UE selects an RSD with the next smallest precedence value which has not been evaluated. If no matching is found, the UE evaluates the next URSP rules with a TD matching the application information in the order of their precedence values.

As depicted in Figure 4, the UE is configured with multiple URSP rules including URSP rule 1, ..., URSP rule N, URSP rule N+1, ..., and so on so forth. Each URSP rule comprises a TD and a list of RDSs. For example, URSP rule N+1 includes a TD, RSD1 and RSD2. If the UE finds the TD in URSP rule N+1 matching the application information, the UE then selects an RSD, e.g., RSD1, with the next smallest precedence value for URSP rule matching. The UE then determines the RSD components and parameters in RSD1 and tries to match with an existing PDU session or (if existing PDU session is not found) to create a new PDU session. In one novel aspect, the UE also checks whether there are any conflict RSD components for redundant PDU session. The UE first determines whether RSD1 includes a "PDU session pair ID type" or "RSN type" route selection descriptor component or both. If so, then the UE knows that RSD1 is intended to be associated with a redundant PDU session. The UE further determines whether the same RSD1 also includes "multi-access preference type" descriptor component or includes "preferred access type" that is set to "non-3GPP access". If so, then the UE knows that RSD1 is not appropriate for redundant PDU session. As a result, RSD1 comprises conflicting parameters and should be ignored by the UE for URSP rule matching. The UE then selects the next RSD, e.g., RSD2, with the next smallest precedence value for URSP rule matching.

Note that if the UE does not skip RSD1, the UE may try to establish a redundant PDU session over non-3GPP access. If the establishment is successful, the redundant PDU session cannot be used for duplicated packets over non-3GPP access since it is not supported by 5GS. If the establishment fails, the UE may continue to retry and wasting time and resource. Similarly, the UE may try to use an MA PDU session to establish a redundant PDU session. If the establishment is successful, the redundant PDU session cannot be used for duplicated packets over non-3GPP access since it is not supported by 5GS. If the establishment fails, the UE may continue to retry and wasting time and resource.

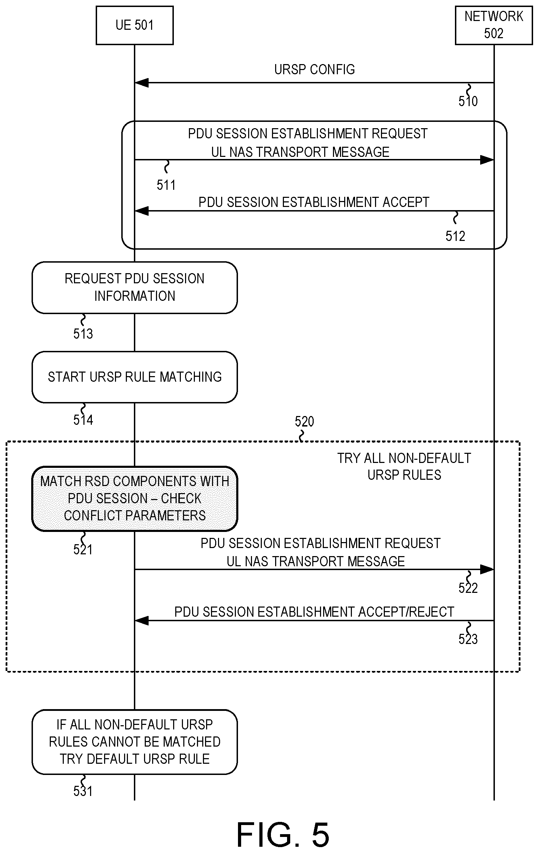

Figure 5 illustrates a sequence flow between a UE and the network for enhanced URSP rule matching for redundant PDU session in accordance with one novel aspect of the present invention. In step 510, network 502 (via PCF) provides URSP configuration or update to UE 501. URSP includes a set of URSP rules, including one default URSP rule. In steps 511, UE 501 sends a PDU session establishment request message to establish a PDU session with a list of UE-requested parameters. The stored PDU session parameters are assigned by the network via a PDU session establishment accept message in step 512. In step 513, upper layers of UE 501 request PDU session information, e.g., triggered by starting an application. In other words, the upper layers of the UE request information of the PDU session via which to send a PDU of an application. In order to determine the association between the application and a PDU session or non-seamless non-3GPP offload, the UE upper layers proceed with the URSP rule matching in step 514.

In step 520, UE 501 tries all non-default URSP rules in an order of the precedence values. Specifically, in step 521, UE 501 selects a matching URSP rule, and then either finds existing PDU session, or establishes new PDU session, that matches at least one of the route selection descriptors of the selected URSP rule. If no matching PDU sessions exists, the UE NAS layer then attempts to establish a new PDU session. For example, in step 522, UE 501 sends a PDU session establishment request to the network. In step 523, the network sends a PDU session establishment accept to UE 501 and the PDU session is established successfully. Otherwise, the network sends a PDU session establishment reject to UE 501 and the PDU session is not established. After step 520, if all non-default URSP rules cannot be matched with the application, then in step 531, UE 501 tries the default URSP rule, which includes a match-all traffic descriptor. If the association is still unsuccessful, then UE 501 informs the upper layers of the failure.

In step 521, UE 501 also checks whether there are any conflict RSD components for redundant PDU session. The UE first determines whether RSD1 includes a "PDU session pair ID type" or "RSN type" route selection descriptor component or both. If so, then the UE knows that RSD1 is intended to be associated with a redundant PDU session. The UE further determines whether the same RSD1 also includes "multi-access preference type" descriptor component or includes "preferred access type" that is set to "non-3GPP access". If so, then the UE knows that RSD1 is not appropriate for redundant PDU session. As a result, RSD1 comprises conflicting parameters and should be ignored by the UE for URSP rule matching.

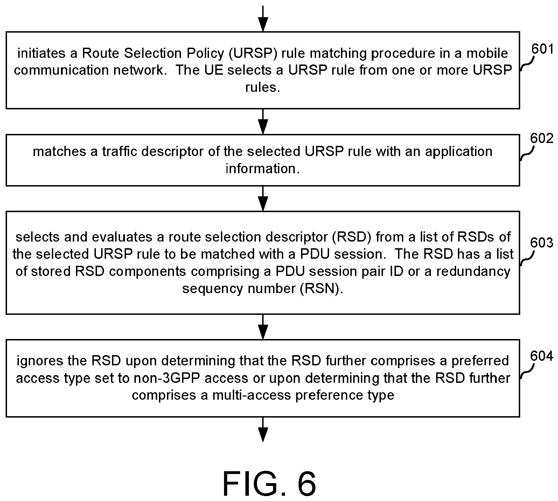

Figure 6 is a flow chart of a method of enhanced URSP rule matching in accordance with one novel aspect of the present invention. In step 601, a UE initiates a Route Selection Policy (URSP) rule matching procedure in a mobile communication network. The UE selects a URSP rule from one or more URSP rules. In step 602, the UE matches a traffic descriptor of the selected URSP rule with an application information. In step 603, the UE selects and evaluates a route selection descriptor (RSD) from a list of RSDs of the selected URSP rule to be matched with a PDU session. The RSD has a list of stored RSD components comprising a PDU session pair ID or a redundancy sequency number (RSN). In step 604, the UE ignores the RSD upon determining that the RSD further comprises a preferred access type set to non-3GPP access, or wherein the UE ignores the RSD upon determining that the RSD further comprises a multi-access preference type.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method, comprising:
initiating a Route Selection Policy (URSP) rule matching procedure by a User Equipment (UE) in a mobile communication network, wherein the UE selects a URSP rule from one or more URSP rules;
matching a traffic descriptor of the selected URSP rule with an application information;
selecting and evaluating a route selection descriptor (RSD) from a list of RSDs of the selected URSP rule to be matched with a PDU session, wherein the RSD has a list of stored RSD components comprising a PDU session pair ID or a redundancy sequency number (RSN); and
ignoring the RSD upon determining that the RSD further comprises a preferred access type set to non-3GPP access, or ignores the RSD upon determining that the RSD further comprises a multi-access preference type.

2. The method of Claim 1, wherein the URSP rule matching procedure is initiated by upper layers of the UE and is triggered due to need to send a PDU of an application.

3. The method of Claim 1, wherein each URSP rule comprises a precedence value, a traffic descriptor, and a list of route selection descriptors.

4. The method of Claim 1, wherein the traffic descriptor comprises at least one of application identifiers, IP tuples, non-IP descriptors, data network names, connection capabilities, and domain descriptors.

5. The method of Claim 1, wherein each RSD from the list of RSDs is associated with a precedence value indicating a priority for matching.

6. The method of Claim 1, wherein the UE skips the RSD and selects another RSD from the list of RSDs that has a lowest precedence value and has not been evaluated.

7. The method of Claim 6, wherein the UE skips the selected URSP rule when there is no other RSD from the list of RSDs that has not been evaluated.

8. A User Equipment (UE), comprising:
an upper layer handling circuit that initiates a UE Route Selection Policy (URSP) rule matching procedure in a mobile communication network, wherein the UE selects a URSP rule from one or more URSP rules;
a Route Selection Policy (URSP) handling circuit that matches a traffic descriptor of the selected URSP rule with an application information, wherein the UE selects and evaluating a route selection descriptor (RSD) from a list of RSDs of the selected URSP rule to be matched with a PDU session; and
a control circuit that determines that the RSD has a list of stored RSD components comprising a PDU session pair ID or a redundancy sequency number (RSN), wherein the UE ignores the RSD upon determining that the RSD further comprises a preferred access type set to non-3GPP access or upon determining that the RSD further comprises a multi-access preference type.

9. The UE of Claim 8, wherein the URSP rule matching procedure is initiated by upper layers of the UE and is triggered due to need to send a PDU of an application.

10. The UE of Claim 8, wherein each URSP rule comprises a precedence value, a traffic descriptor, and a list of route selection descriptors.

11. The UE of Claim 8, wherein the traffic descriptor comprises at least one of application identifiers, IP tuples, non-IP descriptors, data network names, connection capabilities, and domain descriptors.

12. The UE of Claim 8, wherein each RSD from the list of RSDs is associated with a precedence value indicating a priority for matching.

13. The UE of Claim 8, wherein the UE skips the RSD and selects another RSD from the list of RSDs that has a lowest precedence value and has not been evaluated.

14. The UE of Claim 13, wherein the UE skips the selected URSP rule when there is no other RSD from the list of RSDs that has not been evaluated.
